# EUROPÄISCHE PATENTANMELDUNG

(11) **EP 4 703 200 A1**
(43) Veröffentlichungstag der Anmeldung: **04.03.2026**
(21) Anmeldenummer: 24197427.8
(22) Anmeldetag: 29.08.2024
(51) Int. Cl.: B60P 3/34, B60J 7/16, B60P 3/38

(54) **CAMPINGFAHRZEUG**

(71) Anmelder: SYN Engineering GmbH, 65428 Rüsselsheim (DE)
(72) Erfinder: Klüber-Voss, Thomas, 64546 Mörfelden-Walldorf (DE)
(74) Vertreter: WSL Patentanwälte Partnerschaft mbB

(57) **Zusammenfassung**

Die vorliegende Erfindung betrifft ein Campingfahrzeug und ein Verfahren zu dessen Herstellung.

## Beschreibung

### GEGENSTAND DER ERFINDUNG

Die vorliegende Erfindung betrifft ein Campingfahrzeug und ein Verfahren zu dessen Herstellung.

### HINTERGRUND DER ERFINDUNG

Campingfahrzeuge, wie Campervans, erfreuen sich zunehmender Beliebtheit, da sie eine kompakte, flexible und komfortable Möglichkeit bieten, Reisen oder Ausflüge mit Wohnkomfort zu verbinden. Sie ermöglichen es den Nutzern, unabhängig von festen Unterkünften und vorgegebenen Reiserouten die Freiheit des Reisens zu genießen, während gleichzeitig eine Vielzahl von Annehmlichkeiten bereitgestellt wird, die in herkömmlichen Wohnmobilen oder stationären Unterkünften zu finden sind.

Üblicherweise bieten Camperfahrzeuge, wie Campervans, die Möglichkeit in ihnen zu übernachten und verfügen über Einrichtungen, die ein alltägliches Leben ermöglichen, wie das Vorhandensein einer Kocheinrichtung, und/oder Staufächern. In der Regel verfügen Campervans über Dachaufbauten, welche zusätzlichen abgrenzbaren Raum bieten, welcher dazu genutzt werden kann, in dem Campervan gerade zu stehen, eine Schlafmöglichkeit zu integrieren oder Gegenstände darin zu verstauen. Typische Dachaufbauten sind Hochdächer, also fest installierte, erhöhte Dächer, die dauerhaft die Innenraumhöhe des Fahrzeugs vergrößern; Aufstelldächer, also klappbare Dächer, die häufig entlang der Querachse des Fahrzeugs hochgeklappt werden können; Schlafdächer oder Dachzelte, welche typischerweise als separate Konstruktionen auf dem Dach des Fahrzeugs montiert werden und sich in ein Schlafzelt ausklappen lassen.

Gemäß dem Stand der Technik sind die Dachaufbauten so konstruiert, dass sie entweder zum Schlafen und/oder als Stauraum genutzt werden können oder aber sie dienen der Erweiterung des Fahrzeuginnenraums, wodurch das Stehen innerhalb des Fahrzeugs ermöglicht wird.

DE 2 830 130 A1 offenbart eine Schlafkabine zur Verwendung als Dachaufbau bei Fahrzeugen, wobei die Schlafkabine eine geschlossene Kabinenschale bildet und wobei die Kabine mittels Teleskopstangen ausgefahren werden kann. Die Schlafkabine ist eine separate Komponente, die an externen Komponenten des Fahrzeugs ("Regenrinne") befestigt werden kann. Das Maß der Schlafkabine deckt sich in seiner Breite weitestgehend mit der Wagenbreite. Durch die separate Konstruktion entstehen Lücken zwischen Schlafkabine und Fahrzeug, welche keinen geschlossenen Durchgang ermöglichen.

DE 10 2021 106 143 A1 beschreibt ein Dachzelt zur Montage auf Fahrzeugen, welches einen ersten und einen zweiten Abdeckungsabschnitt umfasst, wobei der erste Abdeckungsabschnitt fest auf dem Dach des Fahrzeugs montiert ist, wohin gegen der zweite Abdeckungsabschnitt nicht direkt mit dem Fahrzeug verbunden ist. Zugang zu dem Dachzelt erlangt man über mindestens eine seitliche Leiter, die von außen in den Innenraum des Dachzeltes führen.

Auch die WO 2023/068761 A1 offenbart ein Dachzelt zur Montage auf Fahrzeugen, welches ein Schutzdach umfasst, das drehbar geöffnet werden kann und welches mit einer Zeiteinheit verbunden ist. Auch hier ist kein Durchgang zum Fahrzeuginneren offenbart, der Zutritt zum Dachzelt wird ebenfalls über eine seitliche Leiter ermöglicht.

Bisherige Campingfahrzeuge, insbesondere Campervans, welche einen Dachaufbau aufweisen, haben häufig eine Gesamthöhe, die die Einfahrt in höhenbeschränkte Areale nicht zulassen, verfügen über einen begrenzten Raum aufgrund von mangelnder Erweiterbarkeit verbrauchen viel Kraftstoff und/oder Energie und/oder sind als separierte Dachaufbauten kaum mit dem Automobilinnenraum verbindbar.

Zwar sind im Stand der Technik bereits Lösungen beschrieben, die Dachöffnungen zum Einstieg in einen Dachaufbau nutzen, wie beispielsweise Hubdächer bekannt. Diese Lösungen sind häufig in ihrem Maß auf die Fahrzeugdimensionen begrenzt und lassen sich nicht erweitern. So ist ein gleichzeitiges freies Bewegen im Fahrzeuginnenraum aufgrund der Dachöffnung und ein Nutzen des Dachaufbaus zum Beispiel zum Schlafen bei Hubdächern nicht gleichzeitig möglich.

Trotz der Fortschritte auf dem Gebiet der Campingfahrzeuge besteht insbesondere vor dem Hintergrund der steigenden Nachfrage und des wachsenden Umwelt- und Komfortbewusstseins der Nutzer ein Bedarf an Optimierung. Herausforderungen stellen die optimale Nutzung des Dachinnenraums, die Integration und Flexibilität des Dachaufbaus in der bei gleichzeitiger Wahrung der äußeren Ästhetik und einer energieeffizienten Fahrweise im geschlossenen Zustand dar.

### AUFGABE

Aufgabe der vorliegenden Erfindung ist es ein Campingfahrzeug bereitzustellen, das möglichst große, zusammenhängende Räume bietet, welche flexibel und optimal nutzbar sind und/oder eine einfache und dauerhaft stabile Integration des Dachaufbaus mit der Fahrzeugkarosserie bietet und/oder eine gute Ästhetik gewährleistet und/oder das im Vergleich zum Stand der Technik umweltfreundlicher und/oder kompakter ist.

### BESCHREIBUNG DER ERFINDUNG

Diese Aufgabe wird insbesondere durch ein Campingfahrzeug nach Anspruch 1 gelöst.

Ein Campingfahrzeug ist ein Fahrzeug, das für den Einsatz in der Freizeit und für Freizeitaktivitäten, insbesondere das mobile Wohnen, konzipiert oder angepasst ist. Bevorzugt ist das erfindungsgemäße Campingfahrzeug ein auf einem Serienfahrzeug basierendes, angepasstes Fahrzeug. Diese Fahrzeuge bieten Mobilität, Komfort und bevorzugt auch Unterbringu ngsmöglichkeiten, genauer Übernachtungsmöglichkeiten. Campingfahrzeuge können sowohl motorisierte Fahrzeuge als auch Anhänger sein, wobei das erfindungsgemäße Campingfahrzeug einen eigenen Antrieb umfasst.

Bevorzugt ist das erfindungsgemäße Campingfahrzeug ein Campervan. Ein Campervan ist ein im Vergleich zu einem klassischen Wohnmobil typischerweise kleineres, kompakteres Fahrzeug, welches so konzipiert oder umgebaut ist, dass es eine Kombination aus Transportmittel und Wohnraum darstellt.

Das erfindungsgemäße Campingfahrzeug umfasst ein Automobil. Ein Automobil ist ein motorisiertes Straßenfahrzeug, das dazu konzipiert ist, Personen und/oder Güter zu transportieren.

Bevorzugt ist das Automobil ein Fahrzeug ausgewählt aus den Fahrzeugklassen bestehend aus Kleintransportern, Hochdachkombis, Minivans, Kompaktvans, Großraumvans, Geländewagen/Sport Utility Vehicles (SUVs) und Kleinbussen.

In einer bevorzugten Ausführungsform gehört das Automobil zu dem Fahrzeugsegment der Utilities, also der leichten Nutzfahrzeuge bis zu einem zulässigen Gesamtgewicht von 3,5 t. Ein Automobil ausgewählt aus der vorgenannten Gruppe hat neben der Möglichkeit der Beförderung von mehreren Personen und/oder einer großen Nutzlast gleichzeitig den Vorteil, dass es besonders platzsparend ist und somit flexibel auf Reisen genutzt werden kann. Durch seine vergleichsweise kompakte Größe können konventionelle Parkplätze aufgesucht werden, sowie solche Parkplätze, die ausdrücklich durch größere Wohnmobile nicht genutzt werden dürfen. Bevorzugt ist ein solches Automobil zudem geländegängig und erlaubt somit auch das Erreichen von abgelegenen Orten oder waldigen Regionen.

In einer bevorzugten Ausführungsform ist das Automobil so konzipiert, dass es bis zu 12 Personen im Automobilinnenraum regelkonform befördern kann, stärker bevorzugt ist das erfindungsgemäße Automobil für maximal 9 Personen, noch stärker bevorzugt für maximal 7 Personen.

Bevorzugt ist der Antriebsstrang des Automobils ein elektrischer Antriebsstrang. Stärker bevorzugt ist das Automobil ein reines Elektrofahrzeug. Durch den elektrischen Antrieb ist das Campingfahrzeug besonders umweltfreundlich aufgrund der Emissionsfreiheit und der Lärmreduktion sowie besonders nachhaltig bei Verwendung von Strom aus erneuerbaren Energiequellen.

Der Begriff Automobilinnenraum bezieht sich auf den gesamten Innenbereich eines Automobils, der von einer Karosserie umschlossen ist und der für Passagiere und Fahrer zugänglich ist. Der Innenraum umfasst alle Komponenten und Einrichtungen, die sich innerhalb der Karosserie befinden und zur Nutzung des Fahrzeugs bestimmt sind. Je nach Ausgestaltung kann der Automobilinnenraum mehr oder weniger herausnehmbare oder umklappbare Sitze umfassen. Der Automobilinnenraum eines Automobils bietet vielerlei Möglichkeiten der flexiblen Ausgestaltung, wobei der Kreativität hier keine Grenzen gesetzt sind. Dabei sollten die Komponenten jedoch sicher und stabil an der Karosserie oder damit verbundenen Komponenten befestigbar sein, um während der Fahrt die Sicherheit des Fahrers und der Fahrgäste durch herumfallende Teile nicht zu beeinträchtigen. Weiterhin sollten die Komponenten den vorhanden Raum effektiv nutzen. Insgesamt bietet eine kluge und durchdachte Ausgestaltung des Automobilinnenraums die Unterbringung von vielen brauchbaren Gegenständen, z.B. Küchenelementen, welche einen längeren Aufenthalt im Automobilinnenraum, zum Beispiel auf Reisen, erlauben.

Das erfindungsgemäße Campingfahrzeug umfasst eine Dachkonstruktion, d.h. den strukturellen Dachaufbau des Automobils, mit Dachhaut und Dachöffnung, und einen die Dachöffnung einfassenden Versteifungsrahmen. Beispielsweise kann solch eine Dachkonstruktion durch eine Dachhaut mit darin angeordnetem, serienmäßig enthaltenen Dachfensterrahmen erhalten werden, der als Versteifungsrahmen dient und bei welchem das Dachfenster entweder entfernt worden ist oder reversibel öffenbar gestaltet ist. Bevorzugt handelt es sich dabei um einen Panoramadachfensterrahmen.

Einfassend bezeichnet in diesem Zusammenhang, dass der Versteifungsrahmen die Öffnung umgibt, stabilisiert und strukturell integriert. Dabei kann der Rahmen die Öffnung vollständig oder teilweise umgeben. Der Rahmen ist vorzugsweise fest mit der Karosserie verbunden oder sogar integral mit dieser ausgestaltet.

Bevorzugt umfasst oder besteht der Versteifungsrahmen aus einem Material ausgewählt aus der Gruppe bestehend aus Metallen, Kunststoffen, Kompositmaterialien oder Mischungen der vorhergehenden. Besonders bevorzugt sind Kompositmaterialien und Metalle, insbesondere Stahl oder Aluminium.

Ein in der Dachkonstruktion enthaltener Rahmen der die Dachhaut umspannt ist nicht ein Versteifungsrahmen im Sinne der Erfindung. Der Versteifungsrahmen im Sinne der Erfindung ist ein zusätzliches Element, welches die Öffnung verstärkend einfasst. Bevorzugt ist der Versteifungsrahmen zumindest abschnittsweise auf der Dachhaut des Automobils angeordnet und bevorzugt grenzt er zumindest abschnittsweise, vorzugsweise vollständig an die Öffnung an.

Ein Dachfensterrahmen ist der strukturelle Rahmen, der das Dachfenster eines Fahrzeugs aufnehmen kann und dieses somit sicher in die Karosserie integriert. Bei der Nutzung eines Serienfahrzeugs mit einem derartigen Dachfensterrahmen kann das Campingfahrzeug sehr einfach hergestellt werden, indem das Dachfenster entfernt oder öffenbar ausgestaltet wird.

In einer weiteren bevorzugten Ausführungsform wird ein Versteifungsrahmen nachträglich in das Automobil eingesetzt. In der Regel wird hierzu eine Öffnung in die Dachhaut eingebracht und der Versteifungsrahmen mit der Dachkonstruktion verbunden bzw. in diese integriert. Die Erfindung betrifft auch die Herstellung eines erfindungsgemäßen Campingsfahrzeuges durch die vorhergehend beschriebenen Schritte.

Der Versteifungsrahmen dient der Stabilisierung der Karosserie, da er insbesondere der Dachkonstruktion eine zusätzliche strukturelle Verstärkung bietet. Weiterhin kann die Dachkonstruktion durch den Versteifungsrahmen die Dachlast besser verteilen, was die strukturelle Integrität des Fahrzeugs insgesamt erhöht. Weiterhin bietet der Versteifungsahmen in einem Campingfahrzeug mit Dachaufbau einen erleichterten Einstieg in den Dachaufbauinnenraum, da er vorzugsweise als Haltegriff genutzt werden kann. Insbesondere wenn er - wie es bevorzugt ist - über die Kante der Öffnung hinauskragt, so erhöht der Versteifungsrahmen die Sicherheit bei der Nutzung des Campingfahrzeugs, z. B. beim Durchsteigen durch die Dachöffnung.

Bevorzugt umfasst der Versteifungsrahmen mindestens eine Dichtung, vorzugsweise als Dichtungsschicht ausgestaltet, die ein Eintreten von Umwelteinflüssen wie Regen oder Luft in den Fahrzeuginnenraum verhindert.

Bevorzugt ist der Versteifungsrahmen und/oder die Dachöffnung gemessen entlang der Längsachse des Fahrzeugs (Bezug: Transportzustand) ≥ 1.000 mm, stärker bevorzugt ≥ 1.300 mm, am stärksten bevorzugt ≥ 1.500 mm lang. Wenn aufgrund der geometrischen Form der Öffnung die Länge variiert, wird hierunter die maximale Länge verstanden. Je länger der Versteifungsrahmen und/oder die Dachöffnung, desto größer ist der Durchgang/Zugang zum Dachaufbauinnenraum und desto einfacher ist der Zugang für die nutzenden Personen. Des Weiteren bietet ein großer Versteifungsrahmen und/oder eine große Dachöffnung eine möglichst große Fläche, in der sich durchschnittlich große erwachsene Personen aufrechtstehend aufhalten können. Ein zu großer Versteifungsrahmen und/oder die Dachöffnung begrenzt jedoch den nutzbaren Platz innerhalb des Dachaufbauinnenraums, der zum Abstellen von Gegenständen oder andere Zwecke verwendet werden kann. Daher ist der Versteifungsrahmen und/oder die Dachöffnung gemessen entlang der Längsachse des Fahrzeugs bevorzugt ≤ 2.000 mm, stärker bevorzugt ≤ 1.800 mm und am stärksten bevorzugt ≤ 1.600 mm.

In Bezug auf die Fahrzeuglänge beträgt die maximale Länge des Versteifungsrahmens und/ Dachöffnung vorzugsweise mindestens 10 % der Campingfahrzeugbreite, bevorzugt mindestens 15%, noch bevorzugter mindestens 20 % und am bevorzugtesten mindestens 25%, in der Regel jedoch weniger als 50 % oder sogar weniger als 40%, um die strukturelle Stabilität hochzuhalten.

In Bezug auf die Fahrzeugbreite beträgt die maximale Breite der des Versteifungsrahm ens und/ Dachöffnung vorzugsweise mindestens 50 % der Campingfahrzeugbreite, bevorzugt mindestens 60%, noch bevorzugter mindestens 70 % und am bevorzugtesten mindestens 75%, in der Regel jedoch weniger als 90 %, um die strukturelle Stabilität hochzuhalten.

Der durch die Dachöffnung erzielte Ausschnitt aus der Dachhaut sollte aus Gründen der Bequemlichkeit ausreichend groß ausgestaltet sein, jedoch einen bestimmten Anteil der gesamten Dachfläche nicht übersteigen, da dies andernfalls zu strukturellen Beeinträchtigungen führen kann. Bevorzugt ist der Anteil der Dachöffnung an der Gesamtfläche der Dachkonstruktion bei Draufsicht auf den Dachaufbau des Campingfahrzeuges in einem Bereich zwischen 20-80 %, bevorzugt 25-70%, noch stärker bevorzugt 30-60% und am bevorzugtesten 30-50%.

In einer bevorzugten Ausführungsform ist die Dachöffnung, welche der Versteifungsrahmen einschließt, dauerhaft frei, insbesondere weist diese keine Verglasung auf. Hierdurch kann der Zugang des Dachaufbauinnenraums über die Dachöffnung des Versteifungsrahmens permanent ermöglicht werden. In einer anderen Ausführungsform umfasst die Dachöffnung eine Abdeckung, wie eine Verglasung, allerdings ist diese bewegbar, insbesondere verschiebbar, angeordnet, sodass der Dachaufbauinnenraum über die Dachöffnung des Versteifungsrahm ens wahlweise zugänglich ist. In anderen Worten ist die Öffnung als reversibel verschließbar.

In einer anderen bevorzugten Ausführungsform umfasst der Versteifungsrahmen ein Material, das ihn zumindest teilweise, bevorzugt vollständig ausfüllt, wobei das Material bewegbar ist, sodass es bevorzugt nur wahlweise den Versteifungsrahmen ausfüllt.

Durch das erfindungsgemäße Campingfahrzeug wird ein Fahrzeug zur Verfügung gestellt, das zusätzlichen Raum, zum Beispiel zum Schlafen, bereitstellt und gleichzeitig den verfügbaren Automobilinnenraum so erweitert, dass er zur Ausübung von zusätzlichen Aktivitäten, wie Kochen, genutzt werden kann. Damit bietet das Campingfahrzeug eine hochfunktionale Lösung mit optimaler Platzausnutzung.

Erfindungsgemäß ist die Dachkonstruktion des Campingfahrzeugs die den Automobilinnenraum nach oben hin abschließende Konstruktion, welche eine Innenverkleidung und einen Dachfensterrahmen umfasst. Die Dachkonstruktion ist Teil des Automobils und ist zumindest lösbar mit dem Dachaufbau verbunden. Vorzugsweise ist die Verbindungsart ausgewählt aus der Gruppe bestehend aus form-, kraft- und stoffschlüssigen Verbindungen sowie Kombinationen der vorgenannten. Besonders bevorzugt ist der Dachaufbau mittels Passungen, Klebeverbindungen und/oder Schraubverbindungen mit der Dachkonstruktion verbunden. Diese zumindest lösbare, vorzugsweise permanente, Verbindung ist bevorzugt ausgewählt aus der Gruppe bestehend aus Schnappverbindungen, Passungen, Schraubverbindungen, Klemmverbindungen oder Mischungen der vorhergehenden. Diese Verbindungen bieten ein hohes Maß an Sicherheit, sodass eine feste Verbindung zwischen Dachaufbau und der Dachkonstruktion des Campingfahrzeugs gewährleistet wird, sodass auch während der Fahrt der Dachaufbau sicher positioniert ist und ein ungewolltes Lösen verhindert wird.

Der Dachaufbau weist erfindungsgemäß einen Transport- und einen Benutzungszustand auf. Im Transportzustand ist die Außenhaut, welche der Dachaufbau umfasst, zusammengeklappt. Dieser für die Fahrt des Campingfahrzeugs vorgesehene Zustand minimiert die Ausmaße des Campingfahrzeuges. Im Benutzungszustand ist die Außenhaut hingegen vollständig entfaltet. Hierdurch bildet sich ein innerhalb der Außenhaut angeordneter Dachaufbauinnenraum, welchem zur Nutzung im stationären Zustand zur Verfügung steht (er kann daher auch als Dachaufbaunutzraum bezeichnet werden).

Der Dachaufbau kann reversibel von dem Transportzustand in den Benutzungszustand überführt werden. Neben dem Transportzustand und dem Benutzungszustand kann der Dachaufbau weitere Zwischenzustände annehmen. Vorteil dieser beiden Zustände ist es, dass der Dachaufbau nicht konstant in seinem platzintensiveren Benutzungszustand sein muss, sondern in den deutlich platzsparenderen Transportzustand umgewandelt werden kann. Bevorzugt ist der Dachaufbau während das Campingfahrzeug in Bewegung ist in seinem Transportzustand. Dies ermöglich eine deutlich niedrigere Gesamthöhe und somit einen geringeren Energieverbrauch durch eine erhöhte Aerodynamik.

Bevorzugt lässt sich der Dachaufbau mittels einer Kontrolleinheit von dem Transportzustand in den Benutzungszustand oder andersherum überführen, wobei die Kontrolleinheit insbesondere elektrisch steuerbar ist.

In einer bevorzugten Ausführungsform umfasst der Dachaufbau weiterhin eine Abdeckung. Als Abdeckung wird in diesem Zusammenhang die äußere Struktur des Dachaufbaus des Campingfahrzeuges bezeichnet, die im Transportzustand des Dachaufbaus den oberen Abschluss des Campingfahrzeugs bildet und das Innere des Fahrzeugs schützt.

Im Transportzustand des Dachaufbaus deckt die Abdeckung die Außenhaut zumindest teilweise, stärker bevorzugt vollständig ab.

Bevorzugt umfasst oder besteht die Abdeckung aus einem Material ausgewählt aus der Gruppe bestehend aus Metallen, Kunststoffen, Kompositmaterialien oder Mischungen der vorhergehenden.

In einer Ausführungsform umfasst die Abdeckung bevorzugt Metalle ausgewählt aus der Gruppe bestehend aus Aluminium, Titan und Legierungen sowie Kombinationen der vorgenannten, insbesondere Stahl. Vorzugsweise besteht die Abdeckung aus diesen Materialien. Diese Materialien sind besonders einfach in der Handhabung, da sie leicht verarbeitet werden können und bei Schäden leicht repariert werden können. Weiterhin sind diese Materialien vergleichsweise kostengünstig, robust und widerstandsfähig.

In einer weiteren bevorzugten Ausführungsform umfasst die Abdeckung Kompositmaterialien ausgewählt aus der Gruppe bestehend aus kohlenstofffaserverstärktem Kunststoff (CFK), glasfaserverstärktem Kunststoff (GFK), aramidfaserverstärktem Kunststoff (AFK) und/oder Kombinationen der vorhergehenden. Vorzugsweise besteht die Abdeckung aus diesen Materialien. Bei dem Kompositmaterial ist mindestens ein Werkstoffbestandteil ein Fasermaterial vorzugsweise umfassend oder bestehend aus Lang- und/oder Endlosfasern und ein weiterer ein Matrixmaterial, insbesondere ein Polymermaterial, in welchem das Fasermaterial zumindest teilweise angeordnet ist. Kompositmaterialien zeichnen sich durch ihr sehr geringes Gewicht bei gleichzeitig hoher Festigkeit und Steifigkeit aus.

In einer weiteren bevorzugten Ausführungsform umfasst die Abdeckung einen Kunststoff ausgewählt aus der Gruppe bestehend aus Polypropylen (PP), Polyurethan (PU), Polyethylen (PE), Acrylnitrit-Butadien-Styrol (ABS) und Kombinationen der vorhergehenden. Vorzugsweise besteht die Abdeckung aus diesen Materialien. Kunststoffe sind besonders kostengünstig und gut formbar. Weiterhin haben sie ein geringes Gewicht.

In einer bevorzugten Ausführungsform ist die Abdeckung mittels eines Drehmechanismus bewegbar, sodass sich die Position der Abdeckung ändern lässt. Bevorzugt lässt sich die Abdeckung mittels des Drehmechanismus von einer Transportposition in eine Benutzungsposition und andersherum infolge einer Arbeitsbewegung ändern. Bevorzugt liegt die Abdeckung in der Transportposition horizontal auf der Dachkonstruktion des Campingfahrzeugs und schließt dieses nach oben hin ab. Stärker bevorzugt umfasst die Abdeckung Dichtungselemente, die die Verbindung der Abdeckung in der Transportposition mit der Fahrzeugkarosserie abdichten. Dies hat den Vorteil, dass die Abdeckung eine Schutzfunktion einnimmt, indem sie das Eindringen von Wasser oder Schmutz in das Fahrzeuginnere und/oder in die unterhalb der Abdeckung befindlichen Komponenten verhindert.

Bevorzugt ist die Abdeckung so konstruiert, dass sie in der Transportposition eine möglichst geringe Angriffsfläche für Fahrtwind bietet, sodass eine aerodynamische Fahrweise mit geringem Energieverbrauch gewährleistet werden kann.

Bevorzugt umfasst der Drehmechanismus einen Scharnierverbindungsabschnitt, der an der Abdeckung befestigt ist. Stärker bevorzugt lässt sich dieser Drehmechanismus über eine Kontrolleinheit betätigen, sodass die Abdeckung nach Betätigen der Kontrolleinheit in die Benutzungsposition (Stellung im Benutzungszustand) und von dort in die Transportposition (Stellung im Transportzustand) und umgekehrt bewegt werden kann.

In einer bevorzugten Ausführungsform ist die Kontrolleinheit elektrisch steuerbar.

In einer bevorzugten Ausführungsform steht die Abdeckung in der Benutzungsposition weitestgehend senkrecht zu der Dachkonstruktion. Weitestgehend senkrecht zu der Dachkonstruktion heißt erfindungsgemäß, dass die Abdeckung in dieser Position einen Winkel von 55° - 110° zur Dachkonstruktion einnimmt.

Stärker bevorzugt ist die Abdeckung lateral drehbar, das heißt, dass die Rotationsachse des Drehmechanismus der Abdeckung parallel zu der Längsachse des Automobils verläuft.

In einer anderen Ausführungsform verläuft die Rotationsachse des Drehmechanismus der Abdeckung parallel zu der Querachse des Automobils.

In einer besonders bevorzugten Ausführungsform umfasst der Scharnierverbindungsabschnitt eine Fixierfunktion. Bevorzugt ist diese Fixierfunktion eine Rastfunktion, stärker bevorzugt ein federgespannter Mechanismus und/oder ein Schnappmechanismus.

Bevorzugt lassen sich die Transportposition und/oder die Benutzungsposition der Abdeckung mittels der Fixierfunktion feststellen.

In einer anderen bevorzugten Ausführungsform wird die Position der Abdeckung mittels Gasdruckfedern festgestellt.

In einer bevorzugten Ausführungsform umfasst der Scharnierverbindungsabschnitt ein Klappgelenk, stärker bevorzugt ist das Klappgelenk mit einem Schnappmechanismus ausgestattet. In einer bevorzugten Ausführungsform bildet die Abdeckung in der Benutzungsposition eine seitliche Begrenzung des Dachaufbauinnenraums. Dies hat den Vorteil, dass die stabile und feste Abdeckung als Wind- und/oder Sonnenschutz genutzt werden kann, sodass ein wind- und/oder sonnengeschützter Dachaufbauinnenraum bei korrekter Ausrichtung des Campingfahrzeugs entsteht. Dies hat neben dem erhöhten Komfort für die Nutzer des Dachaufbauinnenraums weiterhin den Vorteil, dass die Außenhaut, die außerhalb des Dachaufbauinnenraums liegt, vor diesen äußeren Einflüssen geschützt wird und somit besonders langlebig sein kann.

In einer anderen bevorzugten Ausführungsform wird die Abdeckung in der Transportposition mittels eines Mechanismus aus der Gruppe umfassend Schnallenverschlüsse, Riemenverschlüsse, Gurtverschlüsse und Steckschnallenverschlüsse sowie Mischungen der vorhergehenden fixiert, was ein zusätzliches Maß an Sicherheit bietet und ein Öffnen des Dachaufbaus während der Fahrt verhindert.

In einer bevorzugten Ausführungsform ist die Außenhaut mit der Abdeckung befestigt, sodass die Außenhaut in der Benutzungsposition der Abdeckung entfaltet ist und sich ein innerhalb der Außenhaut angeordneter Dachaufbauinnenraum bildet, was dem Benutzungszustand der Dachkonstruktion entspricht und die Außenhaut in der Transportposition der Abdeckung geklappt, vorzugsweise gefaltet, ist, was dem Transportzustand der Dachkonstruktion entspricht.

Bevorzugt ist der Drehmechanismus der Abdeckung mit einem integrierten automatischen Klappmechanismus gekoppelt, der ein vollständiges Entfalten der gesamten Außenhaut ermöglicht. Bevorzugt ist die Außenhaut mit einer Haltestruktur verbunden. In einer bevorzugten Ausführungsform umfasst die Haltestruktur mindestens eine Strebe, wobei die mindestens eine Strebe durch den integrierten automatischen Klappmechanismus bewegt wird. Die Haltestruktur ist vorzugsweise teilweise, bevorzugter vollständig innerhalb der Außenhaut angeordnet.

Bevorzugt ist die Haltestruktur mit der Außenhaut befestigt, stärker bevorzugt verläuft die mindestens eine Strebe entlang der Außenhaut. Sie spannt vorzugsweise die Außenhaut auf.

In einer bevorzugten Ausführungsform umfasst die Haltestruktur ein Metall, einen Kunststoff und/oder ein Kompositmaterial. Stärker bevorzugt besteht die Haltestruktur aus einem der vorhergenannten Materialien.

Bevorzugt ist das Metall ausgewählt aus der Gruppe bestehend aus Aluminium, Titan und Legierungen sowie Kombinationen der vorgenannten, insbesondere Stahl. Diese Materialien sind besonders einfach in der Handhabung, da sie leicht verarbeitet werden können und bei Schäden leicht repariert werden können. Weiterhin sind diese Materialien vergleichsweise kostengünstig, robust und widerstandsfähig und haben eine hohe Stabilität und Tragfähigkeit. Bevorzugt besteht die Haltestruktur aus den zuvor genannten Materialien.

In einer weiteren bevorzugten Ausführungsform umfasst die Haltestruktur Kompositmaterialien ausgewählt aus der Gruppe bestehend aus kohlenstofffaserverstärktem Kunststoff (CFK), glasfaserverstärktem Kunststoff (GFK), aramidfaserverstärktem Kunststoff (AFK) und/oder Kombinationen der vorhergehenden. Bevorzugt besteht die Haltestruktur aus den zuvor genannten Kompostimaterialien. Kompositmaterialien zeichnen sich durch ihr sehr geringes Gewicht bei gleichzeitig hoher Festigkeit und Steifigkeit aus und durch ihre besondere Langlebigkeit, was zur Nachhaltigkeit des Produktes beiträgt.

In einer weiteren bevorzugten Ausführungsform ist die Außenhaut Bestandteil eines Zeltes, wobei das Zelt bevorzugt aufblasbar und/oder aufklappbar ist.

In einer bevorzugten Ausführungsform umfasst die Außenhaut ein Material ausgewählt aus der Gruppe bestehend aus Baumwolle, Nylon, Polyester, Canvas oder Mischungen der vorhergehenden. Besonders bevorzugt umfasst die Außenhaut ein Ripstop-Gewebe, also ein Material, das durch Einwebung von stärkeren Fäden hergestellt wird. Ripstop-Gewebe ist besonders reißfest und robust bei gleichzeitig geringem Gewicht.

In einer weiteren bevorzugten Ausführungsform ist die Außenhaut wasserdicht und bietet UV-Schutz. Mit wasserdicht ist gemäß der DIN ISO 10966 gemeint, dass die Außenhaut einer Wassersäule von ≥ 1.500 mm, bevorzugt von ≥ 3.000 mm, stärker bevorzugt von ≥ 5.000 mm und am stärksten bevorzugt von ≥ 10.000 mm standhält. Je höher die Wassersäule, desto stärkeren Niederschlag und/oder desto langanhaltenderen Niederschlag kann die Außenhaut aushalten bevor sie nachgibt und Wasser durch das Material tritt.

In einer bevorzugten Ausführungsform ist die Außenhaut beschichtet. Bevorzugt umfasst die Beschichtung Polyvinylchlorid (PVC), Polyurethan (PU), Wachs und Mischungen der vorgenannten. Stärker bevorzugt besteht die Beschichtung aus den vorgenannten Beschichtungsmaterialien. Bevorzugt findet die Beschichtung auf beiden Seiten der Außenhaut statt.

In einer anderen bevorzugten Ausführungsform ist nur eine Seite der Außenhaut beschichtet, bevorzugt die in dem Benutzungszustand des Dachaufbaus nach außen weisende Seite. Beschichtung mit den zuvor genannten Beschichtungsmaterialien erhöht die wasserabweisende Wirkung des Materials und verlängert dessen Lebensdauer.

In einer bevorzugten Ausführungsform ist der Dachaufbau lösbar oder nicht-lösbar oder nur destruktiv lösbar mit dem Versteifungsrahmen verbunden. Vorzugsweise ist die Verbindungsart ausgewählt aus der Gruppe bestehend aus form-, kraft- und stoffschlüssigen Verbindungen sowie Kombinationen der vorgenannten. Besonders bevorzugt ist der Dachaufbau mittels Passungen, Klebeverbindungen und/oder Schraubverbindungen mit dem Versteifungsrahmen verbunden.

Vorzugsweise "nicht lösbar" heißt, dass eine routinemäßige Trennung des Dachaufbaus von dem Versteifungsrahmen nicht vorgesehen ist und dass Dachaufbau und Versteifungsrahmen z. B. miteinander verschweißt oder auf andere Weise dauerhaft und fest miteinander verbunden, insbesondere miteinander verschraubt sind. Besonders bevorzugt ist die nicht-lösbare Verbindung derart ausgestaltet, dass sie nur durch Zerstörung oder irreversible Beschädigung der verbundenen Teile und/oder des Verbindungsmittels gelöst werden kann (nur destruktiv lösbar).

Das Nutzen des Versteifungsahmens zur Befestigung des Dachaufbaus hat den Vorteil, dass dieser eine besonders starke und stabile Verbindung erlaubt, die eine zusätzliche Verstärkung überflüssig macht. Der Dachaufbau kann passgenau mit dem Versteifungsrahmen verbunden werden. In einer bevorzugten Ausführungsform können Versteifungsrahmen und Dachaufbau auch integral, d.h. einstückig gefertigt sein.

In einer bevorzugten Ausführungsform umfasst der Dachaufbau weiterhin eine Bodenplatte. Bevorzugt befindet sich die Bodenplatte im Transportzustand des Dachaufbaus zwischen Abdeckung und Dachkonstruktion.

In einer bevorzugten Ausführungsform ist die Bodenplatte beweglich und besonders bevorzugt ist diese in Querrichtung (Bezug: Transportzustand) des Automobils beweglich. Insbesondere kann die Bodenplatte mittels eines Dreh-, Klapp- oder Schiebemechanismus bewegt werden. In bevorzugten Ausführungsformen ist die Bodenplatte lateral dreh- und/oder klappbar, das heißt die Bodenplatte kann bevorzugt entlang der Längsachse des Automobils geklappt oder gedreht werden.

Bevorzugt umfasst der Dreh- oder Klappmechanismus einen Scharnierverbindungsabschnitt, der an der Bodenplatte befestigt ist. Stärker bevorzugt lässt sich dieser Dreh- oder Klappmechanismus über eine zweite Kontrolleinheit betätigen, sodass die Bodenplatte nach Betätigen der zweiten Kontrolleinheit bewegbar ist.

In einer bevorzugten Ausführungsform ist die zweite Kontrolleinheit elektrisch steuerbar.

Die vorzugsweise elektrisch steuerbare zweite Kontrolleinheit ist in einer bevorzugten Ausführungsform mit der vorzugsweise elektrische steuerbaren Kontrolleinheit des Drehmechanismus der Abdeckung verbunden. Stärker bevorzugt wird die zweite Kontrolleinheit automatisch nach betätigen der Kontrolleinheit des Drehmechanismus der Abdeckung ausgelöst. Noch stärker bevorzugt aktivieren die beiden Kontrolleinheiten zeitversetzt die mit ihnen verbundenen Mechanismen.

In einer besonders bevorzugten Ausführungsform umfasst der Scharnierverbindungsabschnitt eine Fixierfunktion. Bevorzugt ist diese Fixierfunktion eine Rastfunktion, stärker bevorzugt ein federgespannter Mechanismus und/oder ein Schnappmechanismus.

In einer bevorzugten Ausführungsform umfasst der Scharnierverbindungsabschnitt ein Klappgelenk, stärker bevorzugt ist das Klappgelenk mit einem Schnappmechanismus ausgestattet. In einer bevorzugten Ausführungsform greift die Fixierfunktion des Scharnierverbindungsabschnitts in einem Winkel von 180°.

Der Vorteil von Dreh- und Klappmechanismen besteht darin, dass sie besonders platzsparende Design ermöglichen und Komponenten je nach Situation und Nutzen in unterschiedliche Positionen befördern können. Insbesondere wenn diese Mechanismen auf festen Scharnieren und/oder Gelenken basieren, bieten diese Mechanismen ein hohes Maß an Stabilität.

Ähnlich wie Dreh- und Klappmechanismen bieten auch Schiebemechanismen die Möglichkeit besonders platzsparende Designs zu erlauben. Schiebemechanismen sind besonders einfach in der Handhabung und benötigen keinen großen Einsatz von Kraft, da sie auf stabilen Schienen und Führungen basieren.

In einer bevorzugten Ausführungsform ist die Bodenplatte lateral, d.h. in Querrichtung verschiebbar und/oder ausziehbar/oder und zusammenschiebbar.

Mittels der zuvor genannten Mechanismen lässt sich die Bodenplatte bevorzugt, insbesondere bei Draufsicht auf den Dachaufbau des Campingfahrzeugs, über die Abmessung des Automobils hinausbewegen.

Bei Draufsicht auf den Dachaufbau des Campingfahrzeugs bedeutet die Darstellung des Dachaufbaus von einer senkrechten Perspektive oberhalb des Campingfahrzeugs. Diese Ansicht zeigt eine Anordnung der Campingfahrzeugkomponenten und erlaubt die Darstellung unterschiedlicher Positionen von Campingfahrzeugkomponenten, insbesondere solcher die lateral und/oder axial bewegbar sind.

Eine von der Position der Bodenplatte im Transportzustand des Dachaufbaus abweichende Position wird als Erweiterungsposition bezeichnet, welche bevorzugt überwiegend außerhalb der Abmessung des Automobils bei Draufsicht auf den Dachaufbau des Campingfahrzeugs liegt, wobei mit überwiegend ≥ 50 %, bevorzugt ≥ 70 %, stärker bevorzugt ≥ 80 % und am bevorzugtesten ≥ 90% der Gesamtfläche der Bodenplatte gemeint ist.

Die Bodenplatte in der Erweiterungsposition bietet eine Erweiterungsfläche, welche bevorzugt zum Schlafen genutzt werden kann. Außerdem bietet sie die Möglichkeit eines zusätzlichen Stauraums oder sogar eines Spieleareals für Kinder, der insbesondere bei regnerischem oder zu sonnigem Wetter flexibel genutzt werden kann.

In einer bevorzugten Ausführungsform hat die Bodenplatte ein Längenmaß, das parallel zur Längsachse des Automobils gemessen wird, von ≥ 1.800 mm, stärker bevorzugt von ≥ 2.000 mm, noch stärker bevorzugt von ≥ 2.300 cm und am bevorzugtesten von ≥ 2.600 mm. Je länger die Bodenplatte, desto optimaler ist die Ausnutzung der Tragfläche der Dachkonstruktion und desto mehr Erweiterungsfläche kann den Nutzern geboten werden.

Jedoch führt eine zu lange Bodenplatte dazu, dass diese schwerer bewegbar ist und sich zudem ab einer bestimmten Länge nicht mehr ohne weiteres zwischen Abdeckung und Dachkonstruktion verstauen lässt. Daher ist die Länge der Bodenplatte bevorzugt ≤ 3.500 mm, stärker bevorzugt ≤ 3.200 mm, noch stärker bevorzugt ≤ 3.000 mm und am stärksten bevorzugt ≤ 2.800 mm.

In einer bevorzugten Ausführungsform ist die Bodenplatte reversibel mit einer Matratze verbunden, wobei die Matratze bevorzugt faltbar, klappbar oder aufblasbar ist.

Bevorzugt hat die Matratze ein Breitenmaß von ≥ 1.000 mm, stärker bevorzugt von ≥ 1.200 mm, noch stärker bevorzugt von ≥ 1.400 mm und am bevorzugtesten von ≥ 1.600 mm. Dies ermöglicht einen adäquaten Komfort für die nutzende Person und erlaubt es auch mit mehr als einer Person die Matratze zu nutzen.

Die reversible Verbindung zwischen Matratze und Bodenplatte wird bevorzugt mittels eines Klettverschlusses, mittels Spanngurten, mittels Riemen und Schnallen, mittels Druckknöpfen und/oder mittels Klemmhalterungen ermöglicht. Diese Mechanismen sind vergleichseiwese simpel und bieten ein hohes Maß an Stabilität. Eine reversible Verbindung zwischen Matratze und Bodenplatte erlaubt eine einfache Montage und Demontage der Matratze für Reinigungszwecke oder zum Lagern in separaten Räumlichkeiten um beispielsweise feuchtigkeitsbedingte Schäden wie Schimmel zu verhindern.

In einer bevorzugten Ausführungsform umfasst der Dachaufbau weiterhin mindestens eine Bodenstütze. Eine Bodenstütze ist ein stabilisierender, typischerweise länglicher Gegenstand, welcher zwischen dem Boden, also dem Untergrund auf dem das Campingfahrzeug steht, und dem zu stützenden Bauteil positioniert ist, um das zu stützende Bauteil in seiner Position zu halten.

Bevorzugt stützt die Bodenstützte im Benutzungszustand des Dachaufbaus den Dachaufbau ab. Stärker bevorzugt stützt sie die Bodenplatte in der Erweiterungsposition der Bodenplatte ab.

Die mindestens eine Bodenstütze ist bevorzugt eine Stange, bevorzugter eine Stange in der Form ausgewählt aus der Gruppe bestehend aus Rundstange, Vierkantstange, Flachstange, T-Stange oder L-Stange. Diese Formen bieten ein besonders hohes Maß an Stabilität und Stützkraft und lassen sich vergleichbar einfach verstauen.

In einer bevorzugten Ausführungsform ist die mindestens eine Bodenstütze klappbar und/oder teleskopierbar. Mit teleskopierbar ist gemeint, dass die Stütze aus mehreren ineinander schiebbaren Segmenten besteht, die ausgezogen und/oder zusammengeschoben werden können, um die Länge der Bodenstütze zu variieren. Teleskopierbare Stützen sind besonders platzsparend und haben den großen Vorteil, dass sie in der Länge verstellbar sein können, so dass sie variable Maße annehmen können. Dies ist insbesondere bei unebenen Untergründen von Vorteil, wo die Länge der Bodenstütze angepasst werden muss. Um die Bodenstützte in der gewünschten Länge zu halten, sind bevorzugt Mechanismen wie Drehverschlüsse, Klemmen oder Knöpfe eingebaut, die die Segmente nach dem Ausziehen fixieren

In einer bevorzugten Ausführungsform ist die mindestens eine Bodenstütze permanent mit der Bodenplatte verbunden. Besonders bevorzugt umfasst diese Verbindung ein klapp- und/oder drehbares Element wie ein Scharnier oder ein Gelenk. Bevorzugt ermöglicht die Verbindung eine Klapp- und/oder Drehbewegung der Stütze zur Bodenplatte in einem Winkel von 90°.

In einer anderen Ausführungsform ist die mindestens eine Stütze reversibel mit der Bodenplatte und/oder dem Dachaufbau verbindbar. Bevorzugt ist diese reversible Verbindung eine Steckverbindung, eine Klemmverbindung oder eine Schraubverbindung.

Bevorzugt befindet sich die Verbindung der mindestens einen Bodenstütze mit der Bodenplatte auf der Seite der Bodenplatte, die in der Erweiterungsposition der Bodenplatte in Richtung des Untergrunds zeigt. Dies ermöglicht eine einfache Verbindung des Untergrunds mit der Bodenplatte mittels der mindestens einen Bodenstütze und gewährleistet somit die Stabilität der Bodenplatte in der Erweiterungsposition.

Die Bodenstütze befindet sich in aufgeklappter und/oder montierter Position im Benutzungszustand des Dachaufbaus bei Draufsicht auf den Dachaufbau des Campingfahrzeugs außerhalb der Abmessung des Automobils.

In einer bevorzugten Ausführungsform umfasst der Automobilinnenraum eine Küchenkonstruktion.

Die erfindungsgemäße Küchenkonstruktion ist eine kompakte, raumoptimierte Einrichtung, welche die wesentlichen Küchenelemente kombiniert. Bevorzugt umfasst die Küchenkonstruktion eine Ausfahrkonstruktion (auch Auszugskonstruktion genannt) und einen Küchenaufbau. Die Ausfahrkonstruktion umfasst bevorzugt die tragende Basis, auf der weitere Elemente des Küchenaufbaus aufgebaut werden. Die Ausfahrkonstruktion bildet das Fundament, die für Stabilität und Lastenverteilung sorgt. Der Küchenaufbau ist die eigentliche Nutzfläche, die auf der Ausfahrkonstruktion aufbaut. Er stellt den sichtbaren und funktionalen Teil der Konstruktion dar.

Bevorzugt umfasst die Küchenkonstruktion eine Koch-, eine Spülmöglichkeit, eine Arbeitsfläche, Stauraum und/oder eine Kühlmöglichkeit.

In einer bevorzugten Ausführungsform ist die Position des Küchenaufbaus veränderbar. Stärker bevorzugt ist der Küchenaufbau in eine Position bewegbar, die zumindest teilweise, bevorzugt vollständig, außerhalb des Automobilinnenraums liegt.

In einer bevorzugten Ausführungsform umfasst die Küchenkonstruktion ein Schienensystem, welches bevorzugt einen Schiebemechanismus ermöglicht. In einer bevorzugten Ausführungsform umfasst die Ausziehkonstruktion das Schienensystem.

Bevorzugt umfasst die Küchenkonstruktion mindestens zwei Schienen und mindestens zwei Schlitten, die entlang der Schienen gleiten können. Bevorzugt lässt sich die Küchenkonstruktion entlang der Schienen verschieben.

Bevorzugt ist das Schienensystem ein Teleskopschienensystem, bei dem jede Teleskopschiene aus mindestens drei Elementen, bevorzugt aus mindestens zwei Schienen, besteht.

In einer bevorzugten Ausführungsform umfasst die Küchenkonstruktion ein Schienensystem, welches einen Überauszug ermöglicht. Ein Überauszug ist im Gegensatz zu einem Teilauszug oder einem Vollauszug ein Auszug, bei welchem die Bewegungsstrecke des auszuziehenden Elements länger ist, als die Auszugsstrecke des Schienensystems und/oder die Auszugslänge, die das Schienensystem erlaubt. Ein Überauszug ermöglicht eine besonders breites Positionsspektrum des auszuziehenden Elements.

Eine Küchenkonstruktion umfassend ein Schiebemechanismus ermöglicht es, den Küchenaufbau in verschiedenen Positionen zu nutzen. So kann dieser bei schlechtem Wetter beispielsweise innerhalb des Automobilinnenraums genutzt werden, während sie vorzugsweise bei gutem Wetter außerhalb des Automobilinnenraums genutzt wird. Weiterhin ist ein Schiebemechanismus einfach zu betätigen und erlaubt auch die Mobilisierung von Lasten mit hohem Gewicht mit einem vergleichsweise geringen Kraftaufwand.

Bevorzugt umfasst die Küchenkonstruktion einen Arretierungsmechanismus. Stärker bevorzugt ist dieser Arretierungsmechanismus ein mechanischer Riegelmechanismus und/oder ein federbelasteter Clipmechanismus.

Ein Arretierungsmechanismus hält die verschiebbaren Teile in bestimmten Positionen, wenn diese nicht bewegt werden sollen. Dies bietet Sicherheit, insbesondere während der Fahrt, indem die Position der Küchenkonstruktion fixiert ist. Auch bietet ein solcher Arretierungsmechanismus Komfort, insbesondere wenn der Küchenaufbau genutzt wird und eine Fixierung ein unkompliziertes Nutzen ohne Verschieben bei Berührung ermöglicht.

In einer bevorzugten Ausführungsform umfasst die Ausziehkonstruktion weiterhin eine Tragplatte, welche mit Schlitten verbunden ist. Bevorzugt ist der Küchenaufbau mit dieser Tragplatte verbindbar.

In einer bevorzugten Ausführungsform ist die Küchenkonstruktion so im Campingfahrzeug positioniert, dass sich der Küchenaufbau in der nicht ausgezogenen Position bei Draufsicht auf den Dachaufbau des Campingfahrzeugs vollständig innerhalb der Abmessung des Versteifungsrahmens befindet. Dies ermöglicht eine komfortable Nutzung der Küchenkonstruktion in der nicht ausgezogenen Position, da durch die optionale Öffnung innerhalb des Dachfensterrahmens in der Benutzungsposition des Dachaufbaus der nutzenden Person eine komfortable Stehhöhe geboten wird.

In einer bevorzugten Ausführungsform lässt sich der Küchenaufbau parallel zur Querachse des Automobils verschieben.

Bevorzugt hat die Küchenkonstruktion in der überausgezogenen Position eine Länge, die größer ist als die Fahrzeugbreite.

Vorzugsweise ist die Auszugslänge größer oder gleich 70% der Campingfahrzeugbreite, bevorzugt größer oder gleich 100 % der Campingfahrzeugbreite. Bevorzugt ist die Küchenkonstruktion derart ausgebildet und eingerichtet, dass sie in der nicht ausgezogenen Position in Fahrtrichtung des Campingfahrzeuges hinter dem Fahrer- oder dem Beifahrersitz angeordnet ist und in Querrichtung des Fahrzeuges aus dem Automobilinnenraum und zwar besonders bevorzugt durch die gegenüberliegende Seitentür hindurch zumindest teilweise, vorzugsweise vollständig, aus dem Automobilinnenraum bewegt werden kann. Gegenüberliegend heißt in diesem Zusammenhang, dass eine hinter dem Fahrersitz positionierte Küchenkonstruktion (nicht ausgezogener Zustand) durch eine Seitentür auf der Beifahrerseite nach draußen bewegt werden kann und eine hinter dem Beifahrersitz positionierte Küchenkonstruktion durch eine Seitentür auf der Fahrerseite.

In einer anderen bevorzugten Ausführungsform ist der Küchenaufbauparallel zur Längsachse des Automobils verschiebbar.

In einer weiteren bevorzugten Ausführungsform ist die Küchenkonstruktion in der überausgezogenen Position vollständig außerhalb des Automobilinnenraums. Bevorzugt kann die überausgezogene Position nur erreicht werden, wenn das Campingfahrzeug an einer Seite geöffnet ist.

In einer Ausführungsform ist der Küchenaufbau durch die Öffnung einer seitlichen Schiebetür verschiebbar.

In einer anderen Ausführungsform ist der Küchenaufbau durch die Öffnung einer Kofferraumtür verschiebbar.

In einer bevorzugten Ausführungsform umfasst das Schienensystem der Küchenkonstruktion ein Material ausgewählt aus der Gruppe bestehend aus Stahl, Aluminium, Edelstahl, Messing, Kunststoff oder Mischungen der vorgenannten. Bevorzugt besteht das Schienensystem der Küchenkonstruktion aus einem der vorgenannten Materialien oder Mischungen dieser.

In einer bevorzugten Ausführungsform beträgt die Gesamthöhe des Campingfahrzeugs, d.h. dessen maximale Höhe, in dem Transportzustand des Dachaufbaus ≤ 2.050 mm, bevorzugt ≤ 2.020 mm, stärker bevorzugt ≤ 2.000 mm, am stärksten bevorzugt ≤ 1.990 mm.

In einer bevorzugten Ausführungsform ist die maximale Höhe des Dachaufbaus 40 cm, stärker bevorzugt 35 cm, noch stärker bevorzugt 30 cm, noch erheblich stärker bevorzugt 25 cm und am stärksten bevorzugt 20 cm.

In einer bevorzugten Ausführungsform ist die Gesamthöhe des Campingfahrzeug inklusive des Dachaufbaus im Transportzustand des Dachaufbaus maximal 30 cm, stärker bevorzugt maximal 25 cm, noch stärker bevorzugt maximal 20 cm und am stärksten bevorzugt maximal 15 cm höher als das vergleichbare Fahrzeug ohne Dachaufbau (in der Regel das Serienfahrzeug). Diese lediglich leicht vergrößerte Fahrzeughöhe ermöglicht die Zufahrt zu Orten, bei denen eine Durchfahrtshöhe einzuhalten ist, wie beispielsweise Garagen, Parkhäuer oder Tiefgaragen, aber auch zu solchen Orten wie beispielsweise Waldstücken, in denen herunterhängende Äste eine Durchfahrtshöhenbegrenzung darstellen.

In einer bevorzugten Ausführungsform beträgt die minimale Höhe des Dachaufbauinnenraums in dem Benutzungszustand des Dachaufbaus ≥ 700 mm, stärker bevorzugt ≥ 800 mm, noch stärker bevorzugt ≥ 900 mm und am stärksten bevorzugt ≥ 1.000 mm. Je höher die minimale Höhe des Dachaufbauinnenraums, desto komfortabler kann dieser genutzt werden, indem beispielsweise ohne Probleme jede Stelle des Dachaufbauinnenraums liegend oder sogar sitzend eingenommen werden kann und/oder durch die optionale Öffnung innerhalb des Dachfensterrahmens eine überdachte Stehmöglichkeit beim Stehen im Fahrzeuginnenraum ermöglicht wird. Bevorzugt beträgt die maximale Höhe des Dachaufbauinnenraums in dem Benutzungszustand des Dachaufbaus ≥ 1.000 mm, stärker bevorzugt ≥ 1.200 mm, noch stärker bevorzugt ≥ 1.400 mm und am stärksten bevorzugt ≥ 1.600 mm, in der Regel jedoch auch ≤2.500 mm oder sogar ≤ 2.000 mm. Je höher die maximale Höhe des Dachaufbauinnenraums, desto komfortabler kann dieser genutzt werden, indem beispielsweise ohne Probleme jede Stelle des Dachaufbauinnenraums liegend, sitzend oder sogar stehend genutzt werden kann und zudem die Möglichkeit geboten wird, dass Kinder diesen Raum zum Spielen komfortabel nutzen können.

Je höher die maximale Höhe ist, desto mehr Material muss verwendet werden, damit dies erreicht werden kann, sowohl für die Außenhaut als auch für die optionale Haltestruktur. Somit steigt auch das Gewicht des Dachaufbaus und auch die Stabilität des Dachaufbauinnenraums wird eingeschränkt, da dieser eine größere Angriffsfläche für äußere Einflüsse wie Wind bietet. Daher ist die maximale Höhe des Dachaufbauinnenraums in dem Benutzungszustand des Dachaufbaus bevorzugt ≤ 2.000 mm, stärker bevorzugt ≤ 1.900 mm, noch stärker bevorzugt ≤ 1.800 mm und am stärksten bevorzugt ≤ 1.700 mm.

Bevorzugt ist die maximale Höhe des Dachaufbauinnenraums zwischen 1.000 und 2.000 mm, stärker bevorzugt zwischen 1.200 und 1.800 mm, noch stärker bevorzugt zwischen 1.300 und 1.700 mm und am stärksten bevorzugt zwischen 1.400 und 1.700 mm.

Die erfindungsgemäße Struktur erlaubt Dachaufbauten mit einem Gewicht ≥ 20 kg, bevorzugt ≥ 50 kg. In einer bevorzugten Ausführungsform beträgt das Gesamtgewicht des Dachaufbaus ≤ 80 kg, stärker bevorzugt ≤ 70 kg, noch stärker bevorzugt ≤ 65 kg und am stärksten bevorzugt ≤ 60 kg. Je geringer das Gesamtgewicht, desto geringer ist der Energieverbrauch für das Fahrzeug und desto einfacher kann der Dachaufbau auf das Fahrzeug montiert werden und von diesem wieder entfernt werden. Weiterhin erlaubt ein geringeres Gesamtgewicht einen besonders versatilen Einsatz, da somit der Dachaufbau auf allen geläufigen Automobilen einsetzbar ist.

In einer bevorzugten Ausführungsform stellt die Dachöffnung des Versteifungsrahmen den einzigen Zugang zum Dachaufbauinnenraum dar. Dies hat den Vorteil, dass der Dachaufbauinnenraum vollständig abgeschlossen konstruiert werden kann, ohne dass Öffnungen wie Türen notwendig sind. Dies Verringert die Wahrscheinlichkeit, dass der Dachaufbau Undichtigkeiten aufweist und vermindert weiterhin den Einsatz von reparaturanfälligen Strukturen, wie Reißverschlüssen.

In einer anderen bevorzugten Ausführungsform kann der Dachaufbauinnenraum über weitere Zugänge verfügen, bevorzugt über seitliche Zugänge, die bevorzugt über Leitern erreichbar sind. Dies bietet ein erhöhtes Maß an Flexibilität und erlaubt auch eine Kompartimentierung, insbesondere wenn der Dachfensterrahmen keine Öffnung aufweist. So können zwei separate Bereiche entstehen, die unabhängig voneinander betreten werden können, der Dachaufbauinnenraum und der Automobilinnenraum.

Die Erfindung betrifft auch die Verwendung eines Automobils mit einer Dachkonstruktion mit einem eine Dachöffnung einfassenden Versteifungsrahmen zur Herstellung eines Campingfahrzeuges gemäß einem der Ansprüche. Besonders bevorzugt handelt es sich dabei um ein Dachfensterrahmen.

Die Erfindung betrifft auch ein Verfahren zur Herstellung eines erfindungsgemäßen Campingfahrzeuges, umfassend das Entfernen eines Dachfensters aus dem Dachfensterrahmen eines Automobils und Verbinden eines Dachaufbaus mit der Dachkonstruktion des Automobils.

Die Erfindung betrifft auch die Verwendung eines Automobils mit einer Dachkonstruktion mit einem eine nachträglich hinzugefügte Dachöffnung einfassenden Versteifungsrahmen zur Herstellung eines Campingfahrzeuges gemäß einem der Ansprüche.

Die Erfindung betrifft auch ein Verfahren zur Herstellung eines erfindungsgemäßen Campingfahrzeuges, umfassend das Entfernen einer Fläche aus der Dachhaut der Dachkonstruktion eines Automobils zum Herstellen einer Dachöffnung, bevorzugt mittels eines schneidenden Trennverfahrens; dem Einsetzen eines Versteifungsrahmens in die Dachöffnung der Dachkonstruktion und dem Verbinden des Versteifungsrahmens und eines Dachaufbaus an der Dachkonstruktion des Automobils.

Ein weiterer erster Aspekt der Erfindung betrifft ein **Campingfahrzeug** umfassend
a) ein Automobil mit
   ▪ einem Antrieb,
      wobei der Antrieb bevorzugt elektrisch ist;
   ▪ einem Fahrgestell;
   ▪ einer Karosserie und
   ▪ einem innerhalb der Karosserie angeordneten Fahrzeuginnenraum für den Transport einer oder mehrerer Passagiere,
b) eine Küchenkonstruktion,
dadurch gekennzeichnet, dass die Position der Küchenkonstruktion veränderbar ist und wobei die Küchenkonstruktion bevorzugt in eine Position bewegbar ist, in der die Küchenkonstruktion zumindest teilweise, bevorzugt vollständig, außerhalb des Automobilinnenraums liegt.

Ein weiterer zweiter Aspekt der Erfindung betrifft ein **Campingfahrzeug** nach Aspekt 1, wobei die Küchenkonstruktion ein Schienensystem umfasst.

Ein weiterer dritter Aspekt der Erfindung betrifft ein **Campingfahrzeug** nach Aspekt 1 oder Aspekt 2,
wobei die Karosserie eine Dachkonstruktion umfasst, die einen eine Öffnung einfassenden Versteifungsrahmen zur rahmenartigen Aufnahme eines Dachfensters aufweist,
wobei das Campingfahrzeug weiterhin einen mit der Dachkonstruktion des Automobils verbundenen Dachaufbau umfassend eine Außenhaut umfasst,
wobei der Dachaufbau einen Transport- und einen Benutzungszustand aufweist, wobei
   die Außenhaut in dem Transportzustand des Dachaufbaus zusammengeklappt ist, und
   die Außenhaut in dem Benutzungszustand des Dachaufbaus entfaltet ist, sodass ein innerhalb dieser Außenhaut angeordneter Dachaufbauinnenraum gebildet wird,
und wobei der Dachaufbau reversibel von dem Transportzustand in den Benutzungszustand überführt werden kann,
**dadurch gekennzeichnet, dass**
das Campingfahrzeug derart ausgestaltet und eingerichtet ist, dass eine offene Verbindung von Fahrzeuginnenraum und Dachaufbauinnenraum über die Dachöffnung des Versteifungsrahmens zumindest wahlweise, vorzugsweise permanent, ermöglicht wird.
Ein weiterer vierter Aspekt der Erfindung betrifft ein **Campingfahrzeug** nach Aspekt 3, wobei der Dachaufbau weiterhin eine Abdeckung umfasst, welche die Außenhaut in dem Transportzustand des Dachaufbaus zumindest teilweise, vorzugsweise vollständig abdeckt und wobei die Abdeckung bevorzugt mittels eines Drehmechanismus bewegbar ist.
Ein weiterer fünfter Aspekt der Erfindung betrifft ein **Campingfahrzeug** nach einem der vorherigen Aspekte 3 - 4, wobei die Rotationsachse des Drehmechanismus der Abdeckung parallel zur Längsachse des Automobils verläuft.
Ein weiterer sechster Aspekt der Erfindung betrifft ein **Campingfahrzeug** nach einem der vorherigen Aspekte 3 - 5, wobei die Außenhaut des Dachaufbaus mit der Abdeckung verbunden ist und/oder der Dachaufbau durch Betätigung des Drehmechanismus der Abdeckung von dem Transport- in den Benutzungszustand überführt werden kann.
Ein weiterer siebter Aspekt der Erfindung betrifft ein **Campingfahrzeug** nach einem der vorherigen Aspekte 3 - 6, wobei der Dachaufbau lösbar mit dem Dachfensterrahmen verbunden ist.
Ein weiterer achter Aspekt der Erfindung betrifft ein **Campingfahrzeug** nach einem der vorherigen Aspekte 3 - 7, wobei der Dachaufbau weiterhin eine Bodenplatte umfasst, wobei die Bodenplatte vorzugsweise in Querrichtung des Automobils beweglich ist, wobei die Bodenplatte bevorzugt mittels eines Dreh-, Klapp- oder Schiebemechanismus bewegt werden kann.
Ein weiterer neunter Aspekt der Erfindung betrifft ein **Campingfahrzeug** nach einem der vorherigen Aspekte 3 - 8, wobei die Bodenplatte bei Draufsicht auf den Dachaufbau des Campingfahrzeugs über die Abmessung des Automobils hinausbewegt werden kann, bevorzugt in eine Erweiterungsposition, die überwiegend außerhalb der Abmessung des Automobils liegt.
Ein weiterer zehnter Aspekt der Erfindung betrifft ein **Campingfahrzeug** nach einem der vorherigen Aspekte 3 - 9, wobei der Dachaufbau weiterhin eine Matratze umfasst, wobei die Matratze bevorzugt mit der Bodenplatte reversibel verbunden ist.
Ein weiterer elfter Aspekt der Erfindung betriff ein **Campingfahrzeug** nach einem der vorherigen Aspekte 3 - 10, wobei der Dachaufbau weiterhin mindestens eine Bodenstütze umfasst, wobei die Bodenstütze klappbar und/oder teleskopierbar ist und im Benutzungszustand des Dachaufbaus den Dachaufbau abstützt.
Ein weiterer zwölfter Aspekt der Erfindung betrifft ein **Campingfahrzeug** nach einem der vorherigen Aspekte 3 - 11, wobei die Gesamthöhe des Campingfahrzeugs im Transportzustand des Dachaufbaus ≤ 2.050 mm, bevorzugt ≤ 2.000 mm beträgt.
Ein weiterer dreizehnter Aspekt der Erfindung betrifft ein **Campingfahrzeug** nach einem der vorherigen Ansprüche 3 - 12, wobei die minimale Höhe des Dachaufbauinnenraums im Benutzungszustand des Dachaufbaus ≥ 700 mm, bevorzugt ≥ 800 mm beträgt.
Ein weiterer vierzehnter Aspekt der Erfindung betrifft ein **Campingfahrzeug** nach einem der vorherigen Ansprüche 3 - 13, wobei die Öffnung des Versteifungsrahmens den einzigen Zugang zum Dachaufbauinnenraum darstellt.

### Kurzbeschreibung der Figuren

**Fig. 1****:** Perspektivische Darstellung des Campingfahrzeugs mit Dachaufbau mit geöffneter Abdeckung.
**Fig. 2****:** Perspektivische Darstellung des Campingfahrzeugs mit Dachaufbau mit einer Bodenplatte in Erweiterungsposition
**Fig. 3****:** Perspektivische Darstellung des Campingfahrzeugs mit Dachaufbau im Benutzungszustand mit einem eine Außenhaut umgebenden Dachaufbauinnenraum.
**Fig. 4****:** Perspektivische Darstellung des Campingfahrzeugs mit Dachaufbau im Benutzungszustand mit einem eine Außenhaut umgebenden Dachaufbauinnenraum.
**Fig. 5****:** Perspektivische Darstellung des Dachaufbaus mit geöffneter Abdeckung
**Fig. 6****:** Perspektivische Darstellung eines Teilbereichs der Karosserie und einer einen Verstärkungsrahmen umfassenden Dachkonstruktion.
**Fig. 7****:** Perspektivische Darstellung des Campingfahrzeugs mit Dachaufbau im Transportzustand.
**Fig. 8****:** Seitenansicht des Campingfahrzeugs mit Dachaufbau im Transportzustand.
**Fig. 9****:** Perspektivische Darstellung der Küchenkonstruktion in der nicht ausgezogenen Position.
**Fig. 10****:** Perspektivische Darstellung der Küchenkonstruktion in der teilausgezogenen Position.
**Fig. 11****:** Perspektivische Darstellung der Küchenkonstruktion in der überausgezogenen Position.
**Fig. 12****:** Perspektivische Darstellung des Campingfahrzeugs mit Küchenkonstruktion in der überausgezogenen Position.

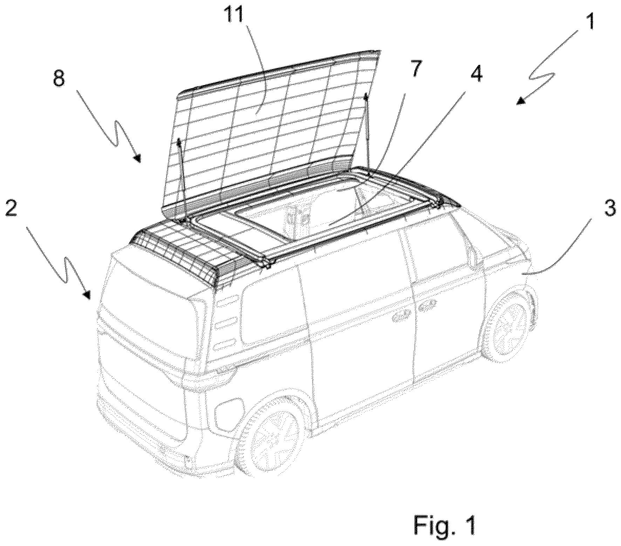

**Fig. 1****:** Das Campingfahrzeug (1) umfasst ein Automobil (2), welches eine Karosserie (3) umfasst, die wiederum eine Dachkonstruktion umfasst. An der Dachkonstruktion ist ein Dachaufbau (8) angebracht, wobei die Abdeckung (11) lateral parallel zur Längsachse des Automobils (2) mittels eines Drehmechanismus nach oben geklappt ist und in ihrer Position fixiert ist. Zwischen der Abdeckung (11) und dem Fahrzeuginnenraum (4) befindet sich die Dachöffnung (7).

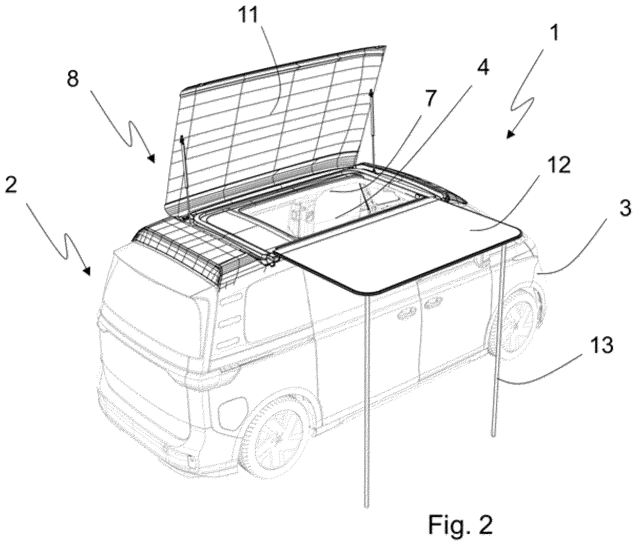

**Fig. 2****:** Das Campingfahrzeug (1) umfasst ein Automobil (2), welches eine Karosserie (3) umfasst, die wiederum eine Dachkonstruktion umfasst. An der Dachkonstruktion ist ein Dachaufbau (8) angebracht, wobei die Abdeckung (11) lateral parallel zur Längsachse des Automobils (2) mittels eines Drehmechanismus nach oben geklappt ist und in ihrer Position fixiert ist. Zwischen der Abdeckung (11) und dem Fahrzeuginnenraum (4) befindet sich die Dachöffnung (7). Der Dachaufbau umfasst weiterhin eine Bodenplatte (12), welche sich im Transportzustand unterhalb der Abdeckung (11) befindet und im Benutzungszustand wie hier gezeigt in eine Erweiterungsposition bewegt werden kann. Die Bodenplatte (12) ist mit Bodenstützen (13) verbunden, welche eine Verbindung zum Untergrund darstellen und die Bodenplatte stützen.

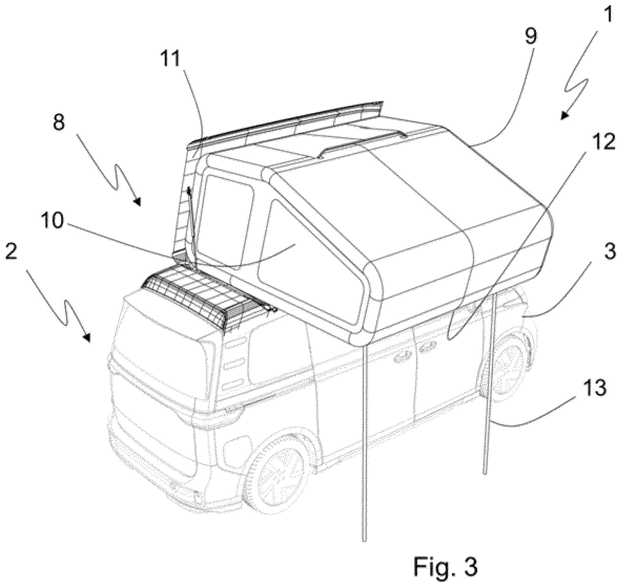

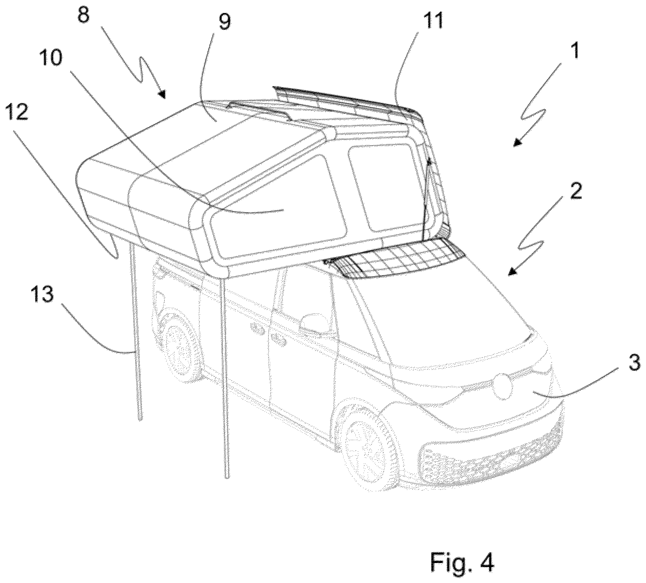

**Fig. 3** und **4****:** Das Campingfahrzeug (1) umfasst ein Automobil (2), welches eine Karosserie (3) umfasst, die wiederum eine Dachkonstruktion umfasst. An der Dachkonstruktion ist ein Dachaufbau (8) angebracht, welcher im Benutzungszustand gezeigt ist, wobei die Abdeckung (11) lateral parallel zur Längsachse des Automobils (2) mittels eines Drehmechanismus nach oben geklappt ist und in ihrer Position fixiert ist. Die Abdeckung (11) ist mit der Außenhaut (9) verbunden, sodass sich bei lateralem Hochklappen der Abdeckung (11) die Außenhaut entfaltet und ein innenliegender Dachaufbauinnenraum (10) entsteht. Der Dachaufbauinnenraum (10) wird zumindest teilweise von einer beweglichen Bodenplatte (12) zu einer Seite abgeschlossen. Die Bodenplatte (12) befindet sich in einer Erweiterungsposition und wird von Bodenstützen (13) gestützt.

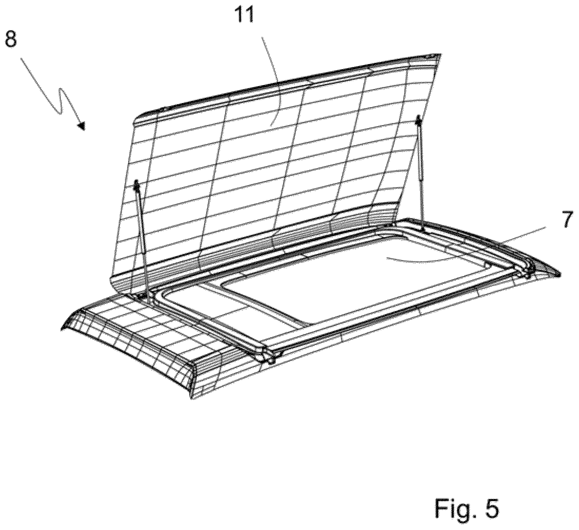

**Fig.** 5: Dargestellt ist der Dachaufbau (8), wobei die Abdeckung (11) lateral mittels eines Drehmechanismus nach oben geklappt wird und in ihrer Position fixiert ist. Weiterhin umfasst der Dachaufbau (8) eine Dachöffnung (7).

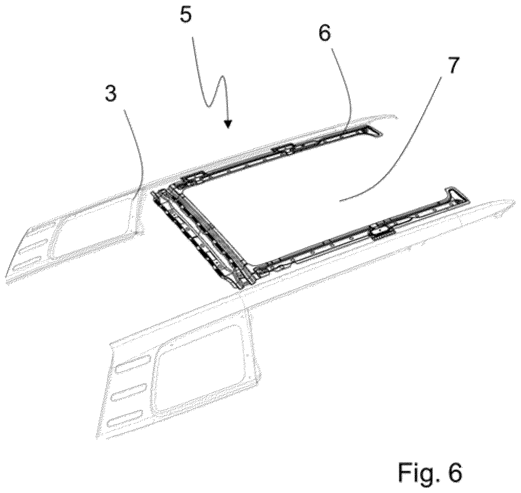

**Fig. 6****:** Die Karosserie (3) umfasst die Dachkonstruktion (5), wobei das serienmäßige Autom o-bildach hier nicht gezeigt ist. Die Dachkonstruktion (5) umfasst einen Verstärkungsrahmen (6), welcher eine Dachöffnung (7) umfasst.

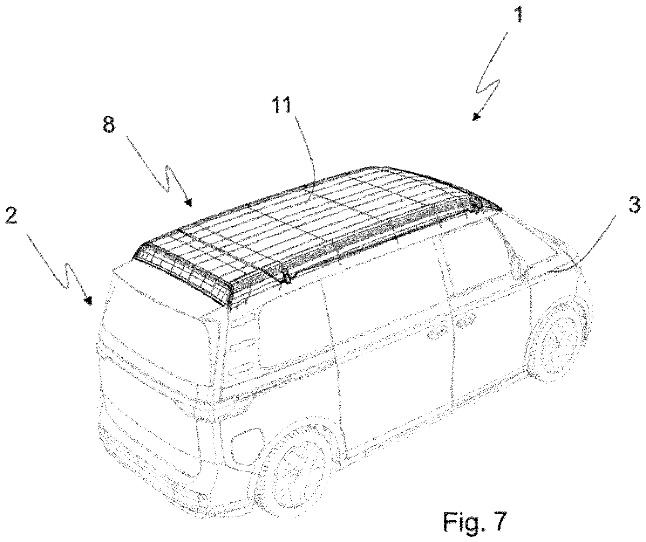

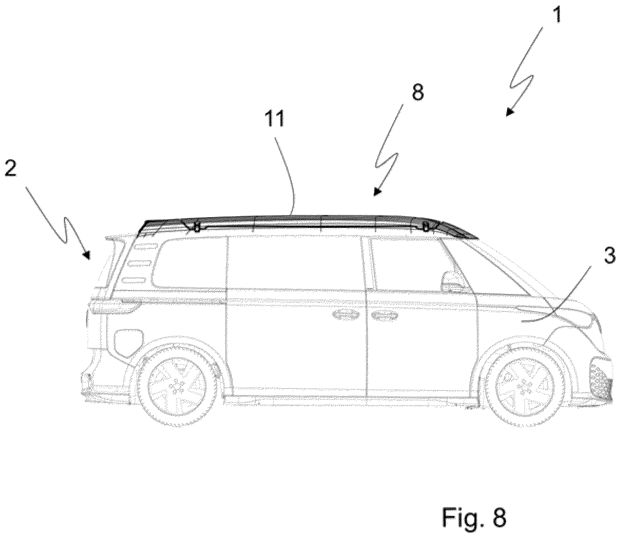

**Fig. 7** und **8****:** Das Campingfahrzeug (1) umfasst ein Automobil (2), welches eine Karosserie (3) umfasst, die wiederum eine Dachkonstruktion aufweist. An der Dachkonstruktion ist ein Dachaufbau (8) angebracht, welcher im Transportzustand gezeigt ist, wobei die Abdeckung (11) parallel zur Dachkonstruktion liegt.

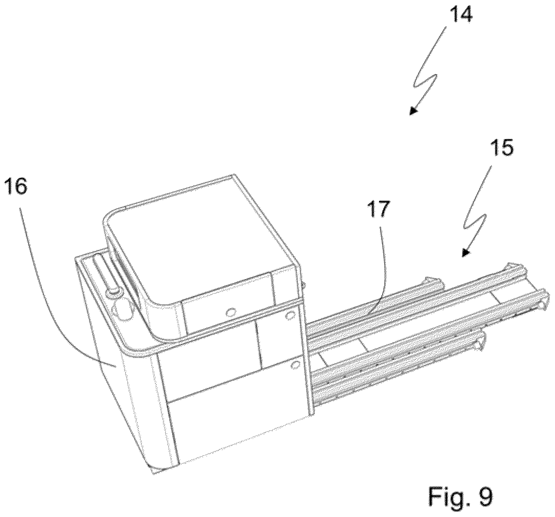

**Fig. 9****:** Die Küchenkonstruktion (14) umfasst einen Küchenaufbau (16) und eine Ausfahrkonstruktion (15) umfassend ein Schienensystem (17). Die Küchenkonstruktion ist in der nicht ausgezogenen Position dargestellt.

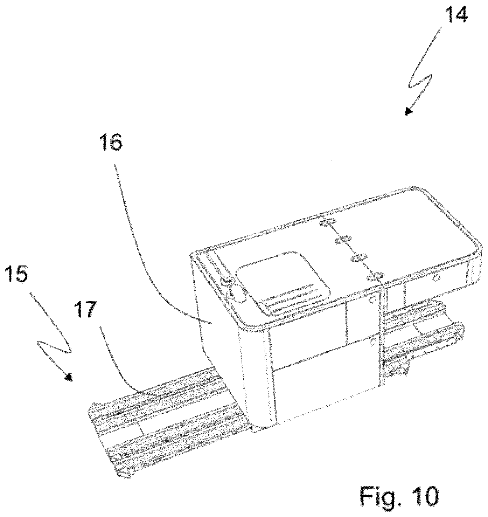

**Fig. 10****:** Die Küchenkonstruktion (14) umfasst einen Küchenaufbau (16) und eine Ausfahrkonstruktion (15) umfassend ein Schienensystem (17). Die Küchenkonstruktion ist in einer teilausgezogenen Position dargestellt.

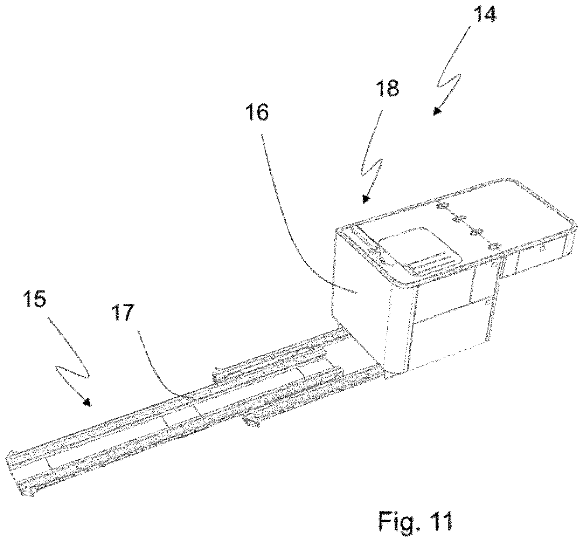

**Fig. 11****:** Die Küchenkonstruktion (14) umfasst einen Küchenaufbau (16) und eine Ausfahrkonstruktion (15) umfassend ein Schienensystem (17). Die Küchenkonstruktion ist in der überausgezogenen Position dargestellt.

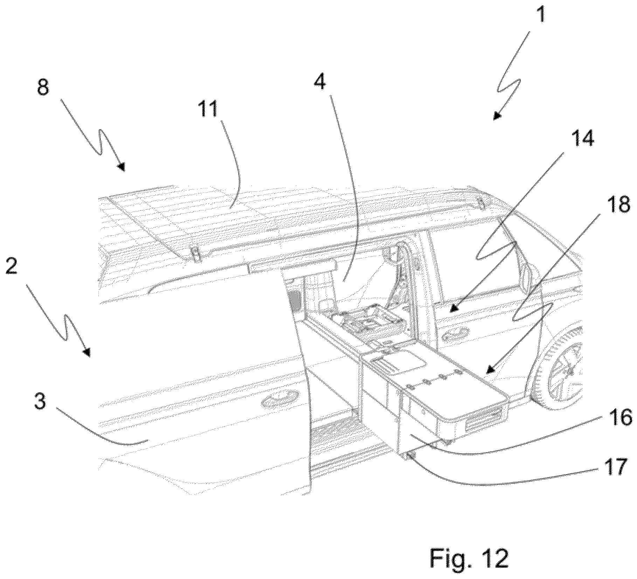

**Fig. 12****:** Das Campingfahrzeug (1) umfasst ein Automobil (2), welches eine Karosserie (3) umfasst, die wiederum eine Dachkonstruktion umfasst. An der Dachkonstruktion ist ein Dachaufbau (8) angebracht, welcher im Transportzustand gezeigt ist, wobei die Abdeckung (11) parallel zur Dachkonstruktion liegt. Innerhalb des Automobils (2) befindet sich der Fahrzeuginnenraum (4) in welchem sich die Küchenkonstruktion (14) befindet, welche mittels des Schienensystems (17) in seine überausgezogene Position (18) bewegt wurde.

### Bezugszeichen

- 1.: Campingfahrzeug
- 2.: Automobil
- 3.: Karosserie
- 4.: Automobilinnenraum
- 5.: Dachkonstruktion
- 6.: Versteifungsrahmen
- 7.: Dachöffnung
- 8.: Dachaufbau
- 9.: Außenhaut
- 10.: Dachaufbauinnenraum
- 11.: Abdeckung
- 12.: Bodenplatte
- 13.: Bodenstütze
- 14.: Küchenkonstruktion
- 15.: Ausfahrkonstruktion
- 16.: Küchenaufbau
- 17.: Schienensystem
- 18.: Überauszug

## Patentansprüche

1. **Campingfahrzeug** umfassend
a) ein Automobil mit
▪ einem Antrieb,
wobei der Antrieb bevorzugt elektrisch ist;
▪ einem Fahrgestell;
▪ einer Karosserie und
▪ einem innerhalb der Karosserie angeordneten Automobilinnenraum für
den Transport einer oder mehrerer Passagiere,
wobei die Karosserie eine Dachkonstruktion umfasst, die eine Dachöffnung und einen die Dachöffnung einfassenden Versteifungsrahmen aufweist,
b) einen mit der Dachkonstruktion des Automobils verbundenen Dachaufbau umfassend eine Außenhaut,
wobei der Dachaufbau einen Transport- und einen Benutzungszustand aufweist, wobei
die Außenhaut in dem Transportzustand des Dachaufbaus zusammengeklappt ist, und
die Außenhaut in dem Benutzungszustand des Dachaufbaus entfaltet ist, sodass ein innerhalb dieser Außenhaut angeordneter Dachaufbauinnenraum gebildet wird,
und wobei der Dachaufbau reversibel von dem Transportzustand in den Benutzungszustand überführt werden kann,
wobei
das Campingfahrzeug derart ausgestaltet und eingerichtet ist, dass eine offene Verbindung von Automobilinnenraum und Dachaufbauinnenraum über die Dachöffnung zumindest wahlweise, vorzugsweise permanent, ermöglicht wird.

2. **Campingfahrzeug** nach Anspruch 1, wobei der Dachaufbau weiterhin eine Abdeckung umfasst, welche die Außenhaut in dem Transportzustand des Dachaufbaus zumindest teilweise, vorzugsweise vollständig abdeckt und wobei die Abdeckung bevorzugt mittels eines Drehmechanismus bewegbar ist.

3. **Campingfahrzeug** nach Anspruch 2, wobei die Rotationsachse des Drehmechanismus der Abdeckung parallel zur Längsachse des Automobils verläuft.

4. **Campingfahrzeug** nach einem der vorherigen Ansprüche, wobei die Außenhaut des Dachaufbaus mit der Abdeckung verbunden ist und/oder der Dachaufbau durch Betätigung des Drehmechanismus der Abdeckung von dem Transport- in den Benutzungszustand überführt werden kann.

5. **Campingfahrzeug** nach einem der vorherigen Ansprüche, wobei der Dachaufbau mit dem Versteifungsrahmen verbunden ist, beispielsweise lösbar oder durch eine Verklebung.

6. **Campingfahrzeug** nach einem der vorherigen Ansprüche, wobei der Dachaufbau weiterhin eine Bodenplatte umfasst, wobei die Bodenplatte vorzugsweise in Querrichtung des Automobils beweglich ist, wobei die Bodenplatte bevorzugt mittels eines Dreh-, Klapp- oder Schiebemechanismus bewegt werden kann.

7. **Campingfahrzeug** nach Anspruch 6, wobei die Bodenplatte bei Draufsicht auf den Dachaufbau des Campingfahrzeugs über die Abmessung des Automobils hinausbewegt werden kann, bevorzugt in eine Erweiterungsposition, die überwiegend außerhalb der Abmessung des Automobils liegt.

8. **Campingfahrzeug** nach einem der vorherigen Ansprüche 6 oder 7, wobei der Dachaufbau weiterhin eine Matratze umfasst, wobei die Matratze bevorzugt mit der Bodenplatte reversibel verbunden ist.

9. **Campingfahrzeug** nach einem der vorherigen Ansprüche, wobei der Dachaufbau weiterhin mindestens eine Bodenstütze umfasst, wobei die Bodenstütze klappbar und/oder teleskopierbar ist und im Benutzungszustand des Dachaufbaus den Dachaufbau abstützt.

10. **Campingfahrzeug** nach einem der vorherigen Ansprüche, wobei der Automobilinnenraum eine Küchenkonstruktion umfasst, wobei die Küchenkonstruktion eine Ausfahrkonstruktion und einen Küchenaufbau umfasst und wobei die Position des Küchenaufbaus veränderbar ist und wobei der Küchenaufbau bevorzugt in eine Position bewegbar ist, in der der Küchenaufbau zumindest teilweise, bevorzugt vollständig, außerhalb des Automobilinnenraums liegt.

11. **Campingfahrzeug** nach Anspruch 10, wobei die Küchenkonstruktion ein Schienensystem umfasst, wobei das Schienensystem einen Überauszug des Küchenaufbaus ermöglicht.

12. **Campingfahrzeug** nach einem der vorherigen Ansprüche, wobei die Gesamthöhe des Campingfahrzeugs im Transportzustand des Dachaufbaus ≤ 2.050 mm, bevorzugt ≤ 2.000 mm beträgt.

13. **Campingfahrzeug** nach einem der vorherigen Ansprüche, wobei die minimale Höhe des Dachaufbauinnenraums im Benutzungszustand des Dachaufbaus ≥ 700 mm, bevorzugt ≥ 800 mm beträgt.

14. **Campingfahrzeug** nach einem der vorherigen Ansprüche, wobei die Öffnung des Dachfensterrahmens den einzigen Zugang zum Dachaufbauinnenraum darstellt.

15. **Verfahren** zur Herstellung eines Campingfahrzeuges nach einem der Ansprüche 1-14, umfassend
▪ das Entfernen einer Fläche aus der Dachhaut der Dachkonstruktion eines Automobils zum Herstellen einer Dachöffnung, bevorzugt mittels eines schneidenden Trennverfahrens;
▪ das Einsetzen eines Versteifungsrahmens in die Dachöffnung der Dachkonstruktion und
▪ das Verbinden des Versteifungsrahmens mit der Dachkonstruktion des Automobils,
▪ das Verbinden eines Dachaufbaus mit der Dachkonstruktion des Automobils.
